Europäisches Patentamt

European Patent Office

Office européen des brevets

(11) Veröffentlichungsnummer: **0 518 888 B1**

## EUROPÄISCHE PATENTSCHRIFT

(45) Veröffentlichungstag der Patentschrift: **06.12.95**

(51) Int. Cl.6: **B01J 2/20**, B29B 9/06, B30B 11/22

(21) Anmeldenummer: **91904377.8**

(22) Anmeldetag: **28.02.91**

(86) Internationale Anmeldenummer: **PCT/EP91/00371**

(87) Internationale Veröffentlichungsnummer: **WO 91/13678 (19.09.91 91/22)**

(54) **VERFAHREN ZUM HERSTELLEN VON GRANULATEN EINES WASCH- ODER REINIGUNGSMITTELS.**

(30) Priorität: **09.03.90 DE 4007601**

(43) Veröffentlichungstag der Anmeldung:
**23.12.92 Patentblatt 92/52**

(45) Bekanntmachung des Hinweises auf die Patenterteilung:
**06.12.95 Patentblatt 95/49**

(84) Benannte Vertragsstaaten:
**AT BE CH DE DK ES FR GB IT LI NL SE**

(56) Entgegenhaltungen:
DE-A- 2 109 607
DE-A- 3 832 006
FR-A- 440 886

(73) Patentinhaber: **Henkel Kommanditgesellschaft auf Aktien**

**D-40191 Düsseldorf (DE)**

(72) Erfinder: **CARDUCK, Franz-Josef, Dr.**
**Landstrasse 18**
**D-5657 Haan (DE)**
Erfinder: **PAWELCZYK, Hubert, Dr.**
**Alt Eller 23**
**D-4000 Düsseldorf (DE)**
Erfinder: **RÄHSE, Wilfried, Dr.**
**Bahlenstrasse 168**
**D-4000 Düsseldorf (DE)**
Erfinder: **JACOBS, Jochen, Dr.**
**Teschensudberg 50**
**D-5600 Wuppertal 12 (DE)**

**Beschreibung**

Die Erfindung betrifft ein Verfahren zum Herstellen Von Granulaten eines Wasch- oder Reinigungsmittels, insbesondere eines Waschmittels für die Textilwäsche, aus einem Gemisch wenigstens teilweise fester feinteiliger Inhaltsstoffe.

Auf dem Gebiet feinteiliger fester und rieselfähiger Wasch- und Reinigungsmittel für Haushalt und Gewerbe, insbesondere auf dem Gebiet der pulverförmigen Waschmittel für Textilien, besteht derzeit ein Trend zur Herstellung von Produkten mit erhöhten Pulverschüttgewichten und von stärker aufkonzentrierten Gemischen von Inhaltsstoffen.

Aus dem einschlägigen druckschriftlichen Stand der Technik sind insbesondere Granulate mit einem Gehalt an Trägersubstanzen und daran adsorbierten flüssigen oder pastenförmigen Tensiden, insbesondere entsprechenden nichtionischen Tensiden bekannt. Zu ihrer Herstellung wurden Verfahren entwickelt, bei denen das flüssige bzw. geschmolzene nichtionische Tensid auf ein zuvor sprühgetrocknetes Pulver aufgesprüht oder mit einer pulverförmigen Trägersubstanz unter granulierenden Bedingungen vermischt wird. Als Trägersubstanz werden lockere, insbesondere sprühgetrocknete wasserlösliche Salze bzw. Salzgemische des Waschmittelbereiches - beispielsweise Phosphate, Silikate und/oder Perborate - ebenso vorgeschlagen wie die wasserunlöslichen Verbindungen, beispielsweise Zeolithe, Bentonite und/oder feinstteiliges Siliciumdioxid. Saugfähige Trägerkörner dieser Art, die insbesondere zur Adsorption von nichtionischen Tensiden entwickelt worden sind und zumeist durch Sprühtrocknung hergestellt werden, sind beispielsweise beschrieben in den US-PSen 3,849,327, 3,886,098, 3,838,027 sowie 4,269,722. Die US-PS 4,707,290 beschreibt ein körniges Adsorptionsmittel, das in der Lage sein soll, hohe Anteile an flüssigen bis pastösen Waschmittelbestandteilen aufzunehmen und durch Sprühtrocknung hergestellt wird. In der Praxis hat sich gezeigt, daß Produkte dieser Art Schwierigkeiten im Verlauf der Einspülphase zeigen können, sie lösen sich nicht vollständig und hinterlassen Rückstände. Ein derart verschlechtertes Einspülverhalten zeigen nicht nur die betreffenden Partikel selbst, sie können auch Einfluß auf die Löslichkeit bzw. das Einspülverhalten der übrigen pulverförmigen Waschmittelkomponenten ausüben. Die Folge ist, daß ein an sich gut einspülbares Pulvergemisch insgesamt schlecht einspülbar wird, wenn es zusätzlich derartige Pulverkomponenten in dem Gemisch enthält. Weitere Vorschläge dieser Art finden sich beispielsweise in der DE 34 44 960-A1 und der EP 149 264.

Alle diese Vorschläge sind vergleichsweise aufwendig. Zunächst wird ein wäßriger Slurry der Trägersubstanz hergestellt, der dann durch Sprühtrocknung in ein körniges poröses Vorprodukt überführt werden muß. In einer zweiten Verfahrensstufe werden die Trägerkörner mit der Flüssigkomponente, insbesondere nichtionischem Tensid besprüht. Das Eindiffundieren des nichtionischen Tensides erfolgt mit Verzögerung, und Adsorbate mit hohem Anteil an nichtionischen Tensiden sind erst nach einer gewissen Behandlungs- und Ruhezeit hinreichend rieselfähig. Geht man hingegen von pulverförmigen Vorprodukten aus, beispielsweise von feinkristallinen Zeolithen oder kristallinen wasserlöslichen Trägersalzen und behandelt diese mit flüssigen oder geschmolzenen nichtionischen Tensiden unter granulierenden Bedingungen, so werden meist Granulate mit sehr ungleichem Kornspektrum und verminderten Rieseleigenschaften erhalten. Vor allen Dingen ist aber das Aufnahmevermögen derartiger Granulate für nichtionische Tenside vergleichsweise beschränkt, wenn nicht wesentliche Stoffeigenschaften, insbesondere die gute Rieselfähigkeit, verlorengehen sollen.

Die ältere Anmeldung WO-A-90/03217 (EP-A-436 574) beschreibt eine Vorrichtung zum Extrudieren einer unter Schwerkraft nicht fließfähigen, plastischen Formmasse. Dieser Extruder kann auch zur Herstellung von granularen Enzymkonzentraten verwendet werden. Aus diesem Dokument geht jedoch nicht hervor, daß eine gesamte Wasch- oder Reinigungsmittelrezeptur mit einer derartigen Vorrichtung extrudiert werden kann, wobei die austretenden Materialstränge unmittelbar nach dem Auslaß auf die vorgegebenen Längen abgeschlagen werden können. Wasch- oder Reinigungsmittel enthalten üblicherweise auch Tenside. Die Anmeldung WO-A-90/03217 offenbart jedoch keine tensidhaltigen Enzymgranulate.

Die vorliegende Erfindung will einerseits die Herstellung von festen gut rieselfähigen und in ihrer speziellen Formgestaltung vorherbestimmbaren Granulaten der Inhaltsstoffe von Wasch- und Reinigungsmitteln ermöglichen, wobei gleichzeitig die Einstellung deutlich erhöhter Schüttgewichte zugänglich werden soll. Zusätzlich und in Verbindung damit will die Erfindung aber auch einen weiteren Problembereich, insbesondere aus dem Gebiet der lagerstabil rieselfähigen Wasch- und Reinigungsmittel, insbesondere für Textilien, besser erschließen. Hier soll insbesondere der Zugang zu schütt- und rieselfähigen Waschmittel-Konzentraten eröffnet werden, die auch bei Lagerung über längere Zeiträume und unter erschwerten Lagerbedingungen ihre Rieselfähigkeit beibehalten.

Die Erfindung will insbesondere Textilwaschmittel in Granulatform zur Verfügung stellen, die sich bei Schüttgewichten bis zu etwa 1000 g/l durch eine vorherbestimmbare einheitliche Form des Granulatkorns

EP 0 518 888 B1

bei guter Rieselfähigkeit auszeichnen und im praktischen Einsatz problemlos gegen die heute und in der jüngeren Vergangenheit üblichen Textilwaschmittelpulver ausgetauscht werden können. Die Erfindung erfaßt dabei mit ihren auf neuartige Weise hergestellten Granulaten sowohl den Bereich gebrauchsfertiger Mehrstoffgemische der angegebenen Einsatzzwecke in Form einheitlich abgemischter Granulatkörner als auch Teilprodukte für das angesprochene Einsatzgebiet, die zur Rezepturvervollständigung noch der Abmischung mit weiteren Bestandteilen des jeweils betroffenen Wasch- und/oder Reinigungsmittels bedürfen. Die Erfindung erfaßt auch solche Abmischungen der nach dem im folgenden geschilderten erfindungsgemäßen Verfahren hergestellten Granulate und nachträglich darauf aufgebrachter oder mit den Granulaten vermischter weiterer Wirkstoffkomponenten der jeweiligen Gesamtrezeptur.

Beim Herstellen dieser Granulate ist es wichtig, insbesondere zur Erzielung eines hohen Schüttgewichtes, ein im äußeren Erscheinungsbild gleichförmiges Produkt zu erhalten. Diese Forderung besteht neben der Forderung nach einem staubfreien und in der Zusammensetzung homogenen Produkt. Um besonders hohe Schüttgewichte zu erreichen, sollen außerdem die Granulate relativ kleine Abmessungen in der Größenordnung von 1 mm haben. Diese kleinen Abmessungen fördern außerdem die Auflösbarkeit der Granulate in Wasser. Die bevorzugte Teilchenform der Granulate ist die Kugelform, die durch eine hier nicht beschriebene Nachbehandlung der gemäß dieser Erfindung erhaltenen stäbchenförmigen Granulate erhalten werden kann.

Der Erfindung liegt daher die Aufgabe zugrunde, ein Verfahren der eingangs genannten Art zu entwickeln, das die Herstellung von gleichmäßigen und in ihren Abmessungen relativ kleinen Granulaten eines tensidhaltigen Wasch- oder Reinigungsmittels, insbesondere eines Waschmittels für die Textilwäsche, mit den oben genannten Eigenschaften in besonders wirtschaftlicher Weise erlaubt. Insbesondere ist ein hoher Durchsatz bei geringem Raumbedarf und bei gleichbleibend hoher Qualität des Produkts wichtig.

Diese Aufgabe wird erfindungsgemäß dadurch gelöst, daß ein Gemisch aus wenigstens teilweise festen feinteiligen Inhaltsstoffen eingesetzt wird, das frei von Enzymen ist und dem man ein Plastifizier- und/oder Gleitmittel zugibt, daß die so erhaltene Formmasse mittels eines Extruders bei mindestens 25 bar durch eine Vielzahl von Bohrungen gepreßt wird, die einen einlaßseitigen Bereich mit größerem und einen auslaßseitigen mit kleinerem Durchmesser aufweisen, wobei das Länge-Durchmesser-Verhältnis beim einlaßseitigen Bereich zwischen 1,5 und 6 und beim auslaßseitigen Bereich zwischen 0,3 und 2 liegt, und daß die austretenden Materialstränge unmittelbar nach dem Auslaß auf vorgegebene Längen quer zerteilt werden. Wichtig ist, daß die Bohrungen die genannte düsenartige Form haben, weil dadurch bei den angegebenen Drücken gleichmäßige und feste Granulate erhalten werden, die einen relativ kleinen Durchmesser haben, ohne daß die Bohrungen verstopfen. Vorteilhaft ist insbesondere, daß ein Scale-up problemlos durch bloße Vermehrung der Anzahl identischer Bohrungen möglich ist.

Im erfindungsgemäßen Verfahren kommen vergleichweise beschränkte Mengen an Flüssigphase(n) zum Einsatz. Das Stoffgemisch wird dann aber unter Verwendung vergleichsweise hoher Drucke so intensiv durchgemischt und verknetet, daß das zuvor noch trocken erscheinende Stoffgemisch zur verdichteten plastifizierten und formgebend verpreßbaren Masse aufgearbeitet ist. Das äußere Erscheinungsbild dieses Verarbeitungsschrittes ähnelt etwa der mastifizierenden Aufarbeitung von Kautschuk enthaltenden Stoffmischungen oder auch der Plastifizierung von Kunststoffgranulaten zur formgebend verpreßbaren Masse. Ebenso wie dort kann auch in der erfindungsgemäß vorgenommenen Homogenisierung und Verdichtung des primär anfallenden trocken erscheinenden Stoffgemisches zur formgebend verpreßbaren Masse eine beschränkte Steigerung der Massetemperatur unterstützend wirken. Die Fähigkeit der beschränkten Flüssiganteile im Stoffgemisch zu erweichenden Plastifizierung nehmen mit steigender Temperatur zu. Der intensive Vermischungsvorgang beispielsweise durch Verkneten kann aus sich heraus zur gewünschten Temperatursteigerung führen. Erforderlichenfalls kann aber auch zusätzlich eine gezielte Temperaturregulierung von außen vorgenommen werden. Primär wird allerdings dieser angestrebte Zustand durch die im Stoffgemisch insgesamt zum Einsatz kommenden Flüssiganteile und durch die Wasseraufnahmefähigkeit der feinstteiligen festen Mischungskomponenten bestimmt. Im allgemeinen gilt, daß hochkonzentrierte Tensidpasten bzw. -gele oder auch die zuvor erwähnten hochkonzentrierten, insbesondere wäßrigen Polymerzubereitungen in Mengen nicht über etwa 12 Gew.-%, vorzugsweise von höchstens etwa 10 Gew.-% - bezogen jeweils auf die Gesamtmischung - eingesetzt werden. Deutlich niedrigere Mengen beispielsweise an Tensidpaste führen bereits zu guten Ergebnissen, beispielsweise im Bereich der Herstellung von Textilwaschmitteln. So kann etwa ein Einsatzgemisch aus Turmpulver/Trägerbead mit oder ohne Zusatz von Natriumperborat (Monohydrat und/oder Tetrahydrat) unter Zusatz von 2 bis 5 Gew.-% Wasser und 4 bis 8 Gew.-% einer 55- bis 60 %igen ABS-Paste zu einer Masse geeigneter Konsistenz für die formgebende Weiterverarbeitung aufbereitet werden.

Das Verarbeitungsverfahren stellt sich im einzelnen wie folgt dar:

EP 0 518 888 B1

Zunächst wird in an sich bekannter Weise ein Vorgemisch der festen und der gegebenenfalls mitverwendeten beschränkten Anteile an Flüssigkomponenten hergestellt. So können auf dem Wege der Sprühtrocknung gewonnene Turmpulver aber auch ganz einfach die jeweils gewählten Mischungsbestandteile als Reinstoffe in feinteiligem Zustand miteinander vermischt werden. Je nach Gutbeschaffenheit wird die benötigte Menge an Flüssigphase und dann das erfindungsgemäß ausgewählte Plastifizier- und Gleitmittel als bevorzugt wäßrige Paste bzw. Gel eingemischt. Gewünschtenfalls können jetzt auch noch weitere Feststoffkomponenten der Vormischung zugegeben werden. Die Gesamtmasse wird kurz nachgemischt, wobei die jeweiligen Stoffanteile so gewählt sind, daß ein bevorzugt rieselfähiges Vorgemisch anfällt, das zur Beschickung einer Homogenisieranlage geeignet ist.

Als Homogenisiervorrichtung werden bevorzugt Kneter beliebiger Ausgestaltung, beispielsweise 2-Schnecken-Kneter gewählt. Es kann dabei zweckmäßig sein, in diesem Schritt der Homogenisierung das zu verpressende Gut auf mäßige Temperaturen, beispielsweise auf 45 bis 60 °C einzustellen. Unter der Schereinwirkung der Knetvorrichtung wird das Vorgemisch verdichtend plastifiziert und unmittelbar anschließend durch die oben genannten Bohrungen zu feinen Strängen verpreßt. Diese Stränge werden im Ausmaß ihrer Ausbildung zu Rohgranulaten der gewünschten Teilchendimension zerschnitten bzw. zerteilt. Zur Durchführung dieses Verfahrensschrittes ist erfindungsgemäß insbesondere das folgende Verfahren geeignet:

Das rieselfähige Vorgemisch wird, vorzugsweise kontinuierlich, einem 2-Schnecken-Kneter/Extruder zugeführt, dessen Gehäuse und dessen Extruder-Granulierkopf auf die vorbestimmte Extrudiertemperatur, beispielsweise also auf ca. 45 bis 50 °C aufgeheizt sind. Unter Schereinwirkung der Extruderschnecken wird das Vorgemisch verdichtet, plastifiziert und anschließend durch die oben genannten Bohrungen zu feinen Strängen extrudiert, die nach dem Austritt mittels eines rotierenden Abschlagmessers zu zylindrischen Pellets zerkleinert werden: Es handelt sich hier um eine Heißabschlag-Granulation im Gegensatz zur Naßabschlag-Granulation bei der Verarbeitung von Schmelzen, z. B. geschmolzenem Kunststoff. Der Durchmesser der Bohrungen und die Strangschnittlänge werden dabei auf die gewählte Granulatdimension abgestimmt.

Eine weitere Vergleichmäßigung des auf die verschiedenen Bohrungen wirkenden Drucks und damit eine Vergleichmäßigung der Form und Konsistenz der herzustellenden Granulate erreicht man, wenn der einlaßseitige Bereich der Bohrungen in Richtung auf den Einlaß konisch abgeschrägt ist. Damit wird eine Wirbelbildung durch die zwischen den Einlässen der Bohrungen stehengebliebenen Stege verringert. Noch weiter wird eine solche Wirbelbildung verringert, wenn der Abstand dieser Bohrungen so gering ist, daß die Ränder der Einlässe benachbarter Bohrungen sich berühren oder schneiden. Wenn man daher eine geeignete Abschrägung und einen geeigneten Abstand der einzelnen Bohrungen voneinander wählt, kann man erreichen, daß an der Einlaßseite zwischen den Bohrungen keine Stege mit senkrecht zur Fließrichtung stehenden Stirnflächen, sondern nur Abschrägungen vorhanden sind, die jeweils nur genau einer Bohrung zugeordnet sind. Rückströmungen, Wirbelbildungen und tote Bereiche innerhalb des Materialflusses werden durch diese Maßnahme weitgehend unterdrückt oder sogar ausgeschlossen.

Das erfindungsgemäße Verfahren wird weiter verbessert, wenn der Übergangsbereich zwischen dem einlaßseitigen Bereich und dem auslaßseitigem Bereich der Bohrungen mit einem Winkel von 20° bis 85°, vorzugsweise 40° bis 80° und insbesondere 45° bis 75° gegen die Ebene senkrecht zur Längsachse dieser Bohrungen geneigt ist. Damit wird eine weitere Vergleichmäßigung der entstehenden Granulate erreicht.

Ferner wird vorgeschlagen, daß der Durchmesser des auslaßseitigen Bereichs der Bohrungen zwischen 0,5 und 5 mm, insbesondere zwischen 1,0 und 2,5 mm liegt. Auch der Durchmesser des einlaßseitigen Bereichs ist von Bedeutung. Er liegt vorteilhaft zwischen 0,8 und 4 mm, insbesondere zwischen 1, 2 und 3 mm.

Je kleiner der Durchmesser der Bohrungen ist, um so wichtiger ist deren innere geometrische Form, damit die Bohrungen nicht verstopfen und ein gleichmäßiges, qualitativ hochwertiges Granulat erhalten wird.

Ein wichtiger Verfahrensparameter beim Extrudieren im erfindungsgemäßen Verfahren ist der Druck, noch wichtiger jedoch ist die Leistungsaufnahme, d.h. der Energieeintrag in die Formmasse, denn bei einem höheren Durchsatz verliert die Formmasse an Viskosität, so daß der Druck im Extruder nur geringfügig ansteigt. Die Leistungsaufnahme hängt von der Rezeptur und der Scherzähigkeit der Formmasse ab. Bevorzugt wird im erfindungsgemäßen Verfahren während des Extrudierens eine Leistung zwischen 0,005 und 1, vorzugsweise 0,01 und 0,8 und insbesondere 0,02 und 0,08 kW pro kg Extrudat eingetragen. Vorgeschlagen wird ferner, daß mit einem Druck von 25 bis 250 bar, insbesondere von 50 bis 200 bar extrudiert wird.

Ein weiterer wichtiger Parameter ist die Temperatur der Formmasse innerhalb des Extruders. Dabei muß zwischen Formmassen unterschieden werden, die temperaturempfindliche Substanzen enthalten oder

4

nicht. Durch den Energieeintrag während des Extrudierens steigt die Temperatur der Formmasse, so daß insbesondere beim Extrudieren der erstgenannten Formmasse gekühlt werden muß, um eine Zersetzung zu vermeiden. Zusätzlich ist eine Kühlung, insbesondere mit Kaltluft direkt nach dem Austritt der Formmassen-Stränge anzustreben, um eine partielle Entfernung von Oberflächenwasser der gebildeten Pellets zu erreichen. Auf diese Weise kann das Verkleben der noch plastifizierten Pellets in diesem Verfahrensschritt sicher verhindert werden. Es wird daher vorgeschlagen, daß man bei die Verpressung bei Massetemperaturen im Bereich zwischen 25 und 75 °C, vorzugsweise zwischen 30 und 70 °C, durchführt und durch Schockkühlung - insbesondere mittels Kaltluft - die austretenden plastifizierten Stränge vor und/oder während ihrer Zerteilung wenigstens oberflächlich abkühlt und antrocknet.

Ein weiteres Problem stellt die gleichmäßige Verteilung der zu verarbeitenden Masse auf den gesamten Querschnitt der die düsenartigen Bohrungen enthaltenden Formgebungsplatte des Granulierkopfs dar. Besonders groß ist das Problem, wenn der Querschnitt der Formgebungsplatte mit z.B. 3 000 bis 6 000 Einzelbohrungen wesentlich größer als der Querschnitt der Austrittsöffnung der Formmasse am Ende der Extruderschnecke ist. Wird keine gleichmäßige Verteilung der zu verarbeitenden Formmasse über den gesamten Querschnitt der Formgebungsplatte erreicht, so tritt die Masse aus den einzelnen Öffnungen mit unterschiedlichen Geschwindigkeiten aus. Damit werden aber die austretenden Stränge von dem vor der Formgebungsplatte rotierenden Messer in unterschiedlich lange Granulate geschnitten. Ein gleichmäßiges Produkt kann so nicht erhalten werden. Diese Druckverteilungsproblematik tritt nicht beim Extrudieren aus der Schmelze, z. B. bei der Kunststoff-Extrusion, auf, da sich der Druck in Flüssigkeiten gleichmäßig verteilt, sondern nur bei Feststoffen wie der hier zu verarbeitenden Formmasse, die zwar plastifiziert, aber so fest ist, daß sie bei Anwendung von Kräften geringer als die Schwerkraft nicht fließt.

Eine Vorrichtung zum Granulieren einer plastischen Formmasse mit einem sich an einen Extruder anschließenden Granulierkopf, der auslaßseitig mehrere Durchgangsbohrungen und extruderseitig einen mit Abstand von der Extruderschnecke und von den Durchgangsbohrungen angeordneten, als Lochplatte ausgebildeten Vorverteiler aufweist, ist zwar aus der DE-OS 25 57 166 bekannt, aber bei dem bekannten Granulierkopf sind nur wenige, höchstens etwa 20 Durchgangsbohrungen vorgesehen, so daß das genannte Problem der gleichmäßigen Verteilung der Formmasse nicht auftritt. Bei der bekannten Vorrichtung wird die Formmasse allein schon deshalb gleichmäßig verteilt, weil sämtliche Durchgangsbohrungen symmetrisch zueinander und in gleichem Abstand von der Mittelachse der Vorrichtung angeordnet sind.

In dieser Erfindung soll dagegen eine gleichmäßige Verteilung der zu verarbeitenden Formmasse über den gesamten Querschnitt der Formgebungsplatte auch dann ermöglicht werden, wenn der Querschnitt der Formgebungsplatte wesentlich größer als der Querschnitt der Austrittsöffnung der Formmasse am Ende der Extruderschnecke ist. Daher wird vorgeschlagen, daß die Formmasse an einem innerhalb des Granulierkopfs des Extruders mit Abstand von der Extruderschnecke angeordneten und mit der Kegelspitze auf die Extruderschnecke weisenden Verteilerkörper, auch Verdrängerkegel genannt, vorbei durch die Bohrungen gepreßt wird.

Erfindungsgemäß wird erreicht, daß das Verhältnis von Länge zu Durchmesser beim Granulat über den gesamten Querschnitt des Granulierkopfs gleich ist.

Besonders günstig zum gleichmäßigen Verteilen der Formmasse ist ferner eine extruderseitig vor dem Verteilerkörper angeordnete Umlenkplatte, deren axiale Bohrung sich im wesentlichen vom Durchmesser der Extruderschnecke bis im wesentlichen zum Durchmesser des Granulierkopfs vergrößert. Durch diese Umlenkplatte wird ein geordneter Weg der Formmasse über den Verteilerkörper auf die kapillaren Bohrungen erreicht.

Die Granulate können zwar auf wirtschaftliche Weise mittels eines Extruders mit vorgesetztem üblichem Lochblech hergestellt werden, aber die kleinen Abmessungen der Granulate und die Forderung nach Wirtschaftlichkeit führen zu einem relativ großen Lochblech mit einer sehr großen Anzahl relativ kleiner Bohrungen. Die in diesem Verfahren erforderlichen hohen Drücke biegen daher ein solches Lochblech nach außen durch, so daß ein vorteilhafter Heißabschlag der Materialstänge direkt am Auslaß quer zu den Materialsträngen erschwert oder sogar verhindert wird. Zur Lösung dieses Teilproblems wird vorgeschlagen, daß die Bohrungen in Lochscheiben, insbesondere aus Keramik, angeordnet sind, die von einer Trägerplatte gehalten werden.

Dadurch, daß statt eines einzigen Lochblechs viele einzelne Lochscheiben in einer Trägerplatte vorgesehen sind, wird auf jede dieser Lochscheiben nur eine relativ kleine Kraft ausgeübt, und die gesamte Trägerplatte mit ihren Lochscheiben biegt sich bei hohem Druck nicht durch. Dies erlaubt die Anordnung eines rotierenden Messers oder einer anderen geeigneten Querschneide-Vorrichtung unmittelbar nach dem Auslaß. Ferner ist auch eine höhere Wirtschaftlichkeit gegeben, da die Bohrungen üblicherweise verschleißen, aber in diesem Fall nicht ein gesamtes Lochblech mit sehr vielen einzelnen Bohrungen, sondern nur einzelne, mit weniger Aufwand herzustellende Lochscheiben auszutauschen sind.

EP 0 518 888 B1

Die Lochscheiben können aus Metall bestehen, bevorzugt wird aber Keramik, da wegen des geringeren Abriebs die Lebensdauer höher ist und wegen der glatteren Oberfläche höhere Spritzgeschwindigkeiten und damit auch höhere Durchsätze erreichbar sind. Zwar sind Keramik-Lochscheiben kostspieliger als Metall-Lochscheiben, aber die Lebensdauer ist um mehr als den Faktor 5 höher.

Ferner wird vorgeschlagen, daß die Lochscheiben an der auslaßseitigen Stirnfläche der Trägerplatte in als Durchgangsbohrungen ausgebildeten Lochscheibenhalterungen angeordnet sind. Dadurch, daß die Formmasse zunächst durch die Lochscheibenhalterung und erst dann durch die Bohrungen in der Lochscheibe gepreßt wird, gleicht sich der Druck innerhalb der Lochscheibenhalterung derart aus, daß der Druck in den Bohrungen über die gesamte Lochscheibe gleich ist und damit ein gleichmäßiges Produkt erhalten wird.

Zum weiteren Verbessern des Druckausgleichs innerhalb der Formmasse wird vorgeschlagen, daß die Formmasse innerhalb des Granulierkopfs des Extruders durch einen zwischen dem Verteilerkörper und der Trägerplatte angeordneten Vorverteiler gepreßt wird. Der Vorverteiler sorgt für einen Druckausgleich zwischen den einzelnen Lochscheiben.

Um Störungen im Fluß der Formmasse im Bereich des Verteilerkörpers zu vermeiden, wird vorgeschlagen, daß die inneren Flächen der Umlenkplatte ausschließlich abgerundete Kanten aufweisen.

Um ein gleichmäßiges Fließen der Formmasse von der Extruderschnecke zwischen der Umlenkplatte und dem Verteilerkörper zu gewährleisten, wird vorgeschlagen, daß der Abstand zwischen der zum Extruder weisenden Fläche des Verteilerkörpers und der dieser gegenüberliegenden inneren Fläche der Umlenkplatte im wesentlichen konstant ist. Ein gleichmäßigerer Fluss ermöglicht nämlich auch eine gleichmäßigere Verteilung der Formmasse auf die zum Extruder weisende Querschnittsfläche des Vorverteilers.

Damit die Drücke, mit denen die Formmasse in die Bohrungen des Vorverteilers gepreßt wird, sich möglichst wenig voneinander unterscheiden, wird vorgeschlagen, daß die Wege der zu granulierenden Formmasse zu den der Längsachse des Granulierkopfes am nächsten und zu den am weitesten entfernt liegenden Lochscheibenhalterungen des Trägerplatte in etwa gleich sind.

Ferner ist es für einen gleichmäßigen Einpreßdruck der Formmasse in die Bohrungen des Vorverteilers günstig, wenn der Abstand zwischen der extruderseitigen äußeren Querschnittsfläche des Vorverteilers und der dieser Fläche gegenüberliegenden Fläche des Verteilerkörpers mindestens 3 % des Durchmessers des Vorverteilers beträgt.

Damit bei Trägerplatten konstanten Durchmessers ein möglichst hoher Durchsatz erzielt wird, wird vorgeschlagen, daß die Lochscheiben, insbesondere in mehreren konzentrischen Reihen, im wesentlichen über die gesamte Trägerplatte verteilt angeordnet sind.

In einer Alternative wird vorgeschlagen, daß die Lochscheiben in nur einer äußeren kreisförmigen Reihe auf der Trägerplatte angeordnet sind. In diesem Fall sind zwar die Durchsätze geringer, aber auch die oben genannten Probleme mit der Druckverteilung.

Anstelle einer Trägerplatte mit darin eingesetzten einzelnen Lochscheiben können erfindungsgemäß die Bohrungen auch direkt in einer Lochplatte angeordnet sein, insbesondere in mehreren konzentrischen Reihen. In diesem Fall muß jedoch das oben angesprochene Problem der möglichen Durchbiegung der Lochplatte beachtet werden. Daher ist es besonders vorteilhaft, wenn in diesem Fall die Bohrungen im wesentlichen nur am äußeren Rand der Lochplatte angeordnet sind, da die Lochplatte im Bereich der Bohrungen dann eine konstante Auswölbung, wenn überhaupt, zeigt: Diese Auswölbung wird auf jeden Fall vermieden, wenn die Lochplatte als ein am Innen- und Außenrand mit dem Granulierkopf verbundener Lochring ausgebildet ist.

Das Problem der Auswölbung stellt sich bei der weiter oben beschriebenen Ausführung der Erfindung nicht, wenn eine Trägerplatte und davon separate in der Trägerplatte einsetzbare Lochscheiben vorgesehen sind. Denn in diesem Fall kann für die Dicke der Trägerplatte ein nahezu beliebiger Wert entsprechend den mechanischen Druckerfordernissen vorgesehen werden, ohne daß diese Dicke der Trägerplatte gleichzeitig die Länge der kapillaren Bohrung bestimmt. Denn diese Länge der kapillaren Bohrungen ist nur durch die unabhängig von der Trägerplatte und dem auf diese lastenden Druck wählbare Dicke der Lochscheibe bestimmt. Diese freie Wählbarkeit gilt natürlich nicht mehr, wenn die Bohrungen direkt in der Lochplatte angeordnet sind, ohne daß eine Trägerplatte und davon getrennte Lochscheiben vorgesehen sind. Aber die Erfindung umfaßt auch diese Alternativen.

Im folgenden werden Ausführungsbeispiele der Erfindung anhand von Zeichnungen näher beschrieben. Es zeigen

Fig. 1       einen Längsschnitt durch einen Granulierkopf eines Extruders gemäß einem ersten Ausführungsbeispiel der Erfindung,

Fig. 2       eine Draufsicht auf die Trägerplatte des Granulierkopfs nach Fig. 1,

6

Fig. 3      einen Längsschnitt durch diese Trägerplatte (Schnitt III-III nach Fig. 2),

Fig. 4      eine Detailvergrößerung aus Fig. 3,

Fig. 5      eine Draufsicht auf eine zu dieser Trägerplatte gehörende Lochscheibe,

Fig. 6      einen Teilschnitt der Lochscheibe (Schnitt VI-VI nach Fig. 5),

Fig. 7      den Längsschnitt der Bohrung in der Lochscheibe,

Fig. 8      den Längsschnitt einer anderen Ausführungsform der Bohrung,

Fig. 9      den Längsschnitt einer Anzahl von Bohrungen,

Fig. 10      eine Draufsicht auf eine Trägerplatte gemäß einem zweiten Ausführungsbeispiel der Erfindung und

Fig. 11      einen Teilschnitt durch einen Granulierkopf gemäß einem dritten Ausführungsbeispiel der Erfindung.

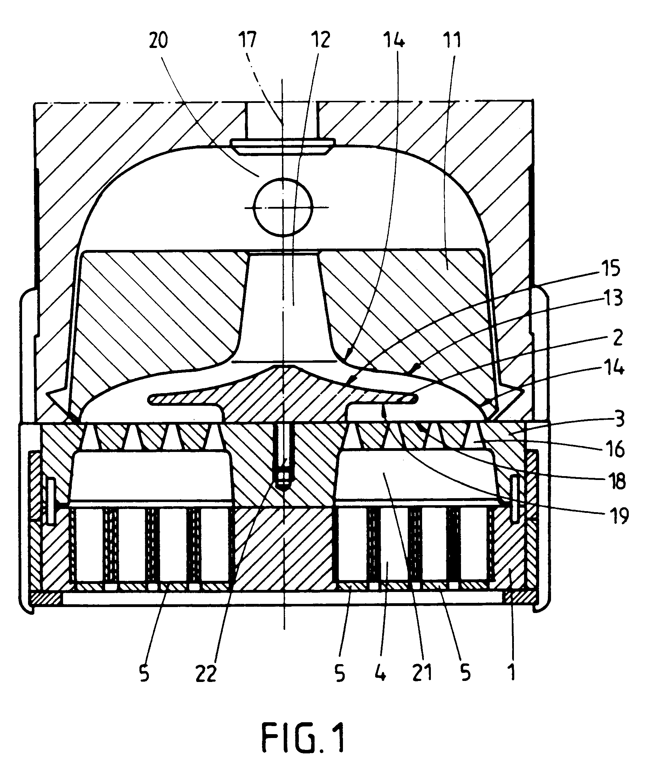

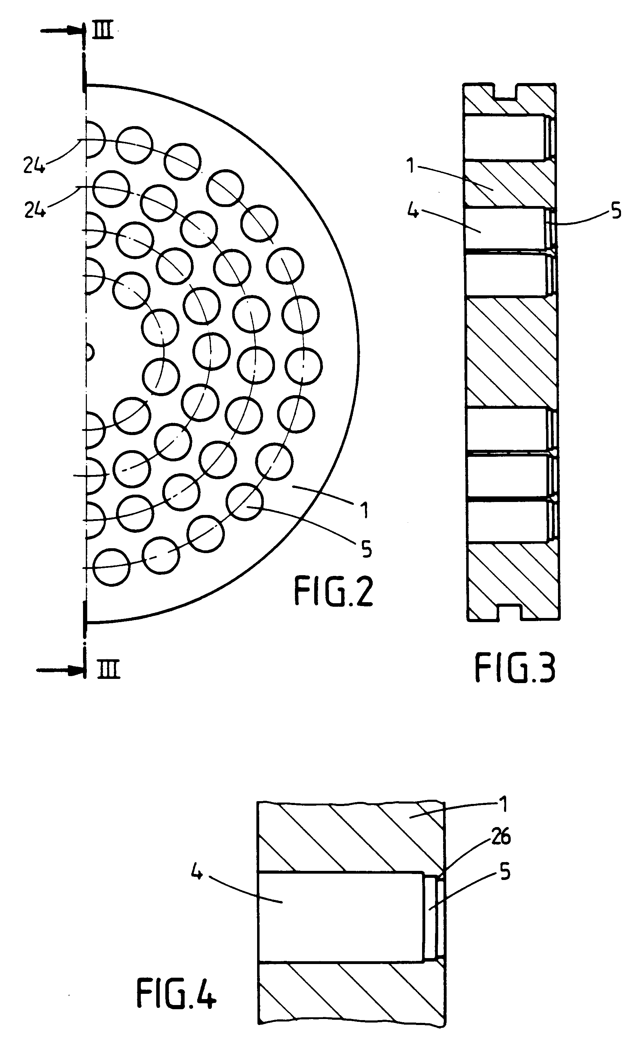

In Figur 1 ist der Querschnitt eines Granulierkopfes entsprechend der Erfindung dargestellt. Bei 17 ist die Längsachse des Granulierkopfes eingezeichnet. Die Formmasse tritt bei 20 in den Granulierkopf ein, durchläuft die Umlenkplatte 11, fließt entlang dieser Platte und dem Verdrängerkegel 2 auf den hinteren Querschnitt 18 des Vorverteilers 3. Durch dessen Öffnungen, den Bohrungen 16, wird die Formmasse in einen freien Bereich 21 zwischen dem Vorverteiler 3 und der Trägerplatte 1 gepreßt. Diese Trägerplatte 1 ist an anderer Stelle als Formgebungsplatte bezeichnet. Sie enthält an ihrer auslaßseitigen Stirnseite eine Vielzahl von Lochscheiben 5, welche Bohrungen 6 mit einem Längsschnitt gemäß Figur 2 aufweisen. Hinter der Trägerplatte 1 ist ein in der Zeichnung nicht dargestelltes rotierendes Messer angeordnet, das die austretenden dünnen Stränge zu Granulaten zerschneidet.

Die Trägerplatte 1 weist eine Vielzahl, in konzentrischen Kreisen um die Längsachse des Granulierkopfes angeordnete Durchgangsbohrungen 4 auf, an deren auslaßseitigen Öffnungen die Lochscheiben 5 angebracht sind. Die dargestellte Trägerplatte enthält z. B. 75 solcher Durchgangsbohrungen 4, von denen jede stirnseitig durch Lochscheiben 5 mit z. B. je 87 kapillarartigen Bohrungen 6 verschlossen sind. Der Durchmesser der Lochscheiben 5 beträgt in diesem Beispiel 27 mm. Der große Vorteil des Systems der Trägerplatte 1 mit davon unabhängigen Lochscheiben 5 liegt darin, daß bei Vergrößerungen und Verkleinerungen des Granulierkopfs die Lochscheiben 5 beibehalten werden und nur die Größe der Trägerplatte 1 sowie die Anzahl der Lochscheiben 5 ohne Scale-Up-Probleme verändert werden.

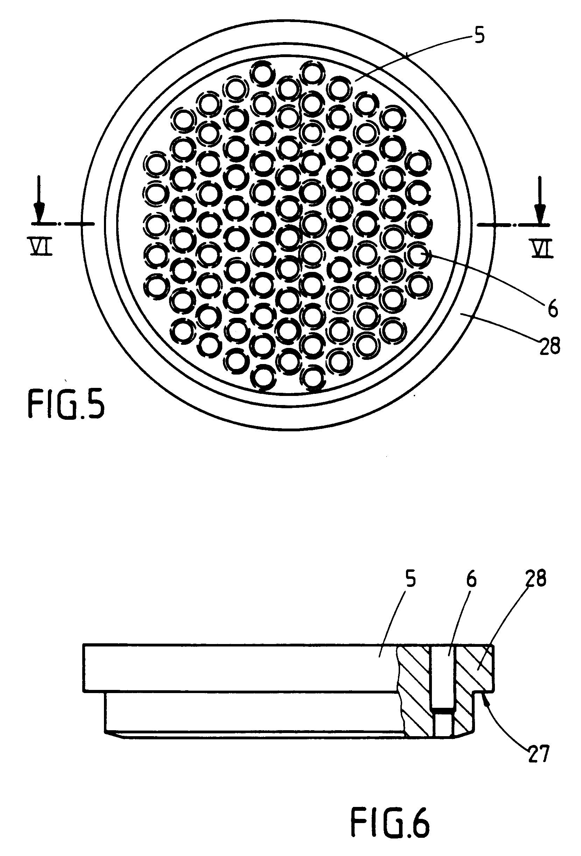

Die Fig. 2 bis 4 stellen die Trägerplatte des Granulierkopfs nach Fig. 1 in Draufsicht und Längsschnitt dar. Die Trägerplatte 1 enthält mehrere konzentrische, über die gesamte Fläche der Trägerplatte 1 verteilte Lochscheiben 5 in Lochscheibenhalterungen 4, die als Durchgangsbohrungen ausgeführt sind. Diese Durchgangsbohrungen 4 haben extruderseitig einen etwas größeren Durchmesser als auslaßseitig, so daß die Lochscheiben 5 mit ihrer in Fig. 5 und 6 dargestellten Schulter 27 an der Auflagefläche 26 anliegen können.

Die Figuren 5 und 6 stellen eine Lochscheibe 5 mit Bohrungen 6 in der Draufsicht und im Längsschnitt dar. Mit ihrem umlaufenden Rand 28 wird die Lochscheibe 5 innerhalb der Durchgangsbohrung von der Trägerplatte 1 abgestützt.

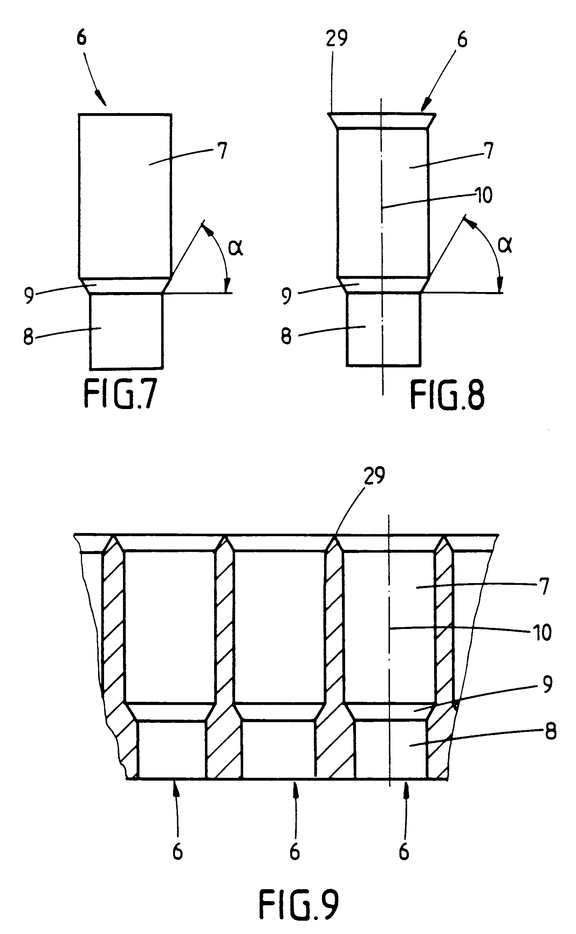

In den Figuren 7 bis 9 sind die nach außen zu einer Art Düse sich verjüngenden Bohrungen 6 mit ihrem einlaßseitigen Bereich 7 und ihrem stirnseitigen, engen, auslaßseitigen Bereich 8 dargestellt.

Der auslaßseitige Bereich 8 hat in diesem Beispiel einen Durchmesser von 0,9 bis 1,2 mm, der einlaßseitige Bereich 7 einen Durchmesser von 1,5 mm. Die Länge des auslaßseitigen Bereichs 8 beträgt 1,4 mm, die Länge des einlaßseitigen Bereichs 7 4,5 mm. Im Übergangsbereich 9 beträgt der Winkel Alpha der Wand gegenüber der Fläche quer zur Längsachse 10 60°. Bei dieser Bohrung wird eine Spritzgeschwindigkeit zwischen 4 bis 10 cm/s, bei doppelt so dicken Bohrungen eine Spritzgeschwindigkeit von etwa 20 cm/s bevorzugt.

Wenn die Formmasse, aus dem Extruder kommend, durch die axiale Bohrung 12 fließt, trifft sie auf den Verdrängerkegel 2 und fließt zwischen der zum Extruder weisenden Fläche 15 des Verdrängerkegels 2 und der dieser gegenüberliegenden inneren Fläche 13 der Umlenkplatte 11 auf den zum Extruder zeigenden Querschnitt 18 des Vorverteilers 3 zu. Dieser Kanal darf sich weder verengen noch erweitern. Damit ein ungestörter Fluss gewährleistet ist, haben die inneren Flächen 13 der Umlenkplatte 11 ausschließlich abgerundete Kanten 14.

An der zum Extruder gerichteten äußeren Querschnittsfläche 18 des Vorverteilers 3 tritt dann die Formmasse durch die Öffnungen 16 in den Raum 21 zwischen dem Vorverteiler 3 und der Trägerplatte 1 ein. Bei 19 ist die der äußeren Querschnittsfläche 18 des Vorverteilers 3 gegenüberliegende Fläche des Verdrängerkegels 2 dargestellt.

Der Durchmesser der Gesamtplatte beträgt 30 bis 45 cm oder mehr, der Verdrängerkegel 2 ist bei 22 durch ein Schraubgewinde fest mit dem Vorverteiler 3 verbunden.

Der in den Fig. 8 und 9 dargestellte einlaßseitige Bereich 7 der Bohrungen 6 ist an seinem äußeren Rand 29 nach außen hin abgeschrägt, und die Bohrungen 6 sind so nahe beieinander angeordnet, daß die Ränder 29 sich berühren. Dadurch wird eine Wirbelbildung innerhalb der fließenden Formmasse durch die zwischen den Bohrungen 6 übrigbleibenden Stege verringert. Wenn die Ränder 29 sich sogar überlappen, kann man erreichen, daß zwischen den Bohrungen 6 überhaupt keine Stege mit einer senkrecht zur Längsachse stehenden Stirnfläche vorhanden sind. Die Formmasse wird beim Auftreffen auf die Lochscheibe in diesem Falle praktisch nicht mehr abgebremst, und es bilden sich auch keine toten Bereiche mit nicht fließender Formmasse aus. Eine Wirbelbildung findet dann ebenfalls nicht statt.

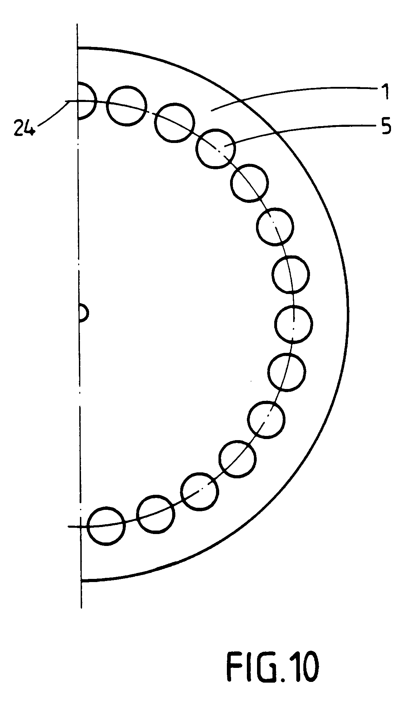

Fig. 10 zeigt eine Draufsicht auf eine andere Trägerplatte 1 entsprechend einem weiteren Ausführungsbeispiel gemäß der Erfindung. In diesem Fall sind die Lochscheiben nicht über die gesamte Fläche der Trägerplatte 1 angeordnet, sondern nur entlang einer einzigen Reihe 24 nahe der Kante der Trägerplatte 1. In diesem Fall tritt die Druckverteilungsproblematik nicht in gleichem Maße wie bei der Trägerplatte nach Fig. 2 auf, aber es wird auch ein wesentlich geringerer Durchsatz erreicht. Auch in diesem Fall sind die Bohrungen in den Lochscheiben 5 entsprechend den Fig. 7 bis 9 ausgebildet. Die Lochscheibe nach Fig. 10 wird also ebenfalls von der Erfindung umfaßt.

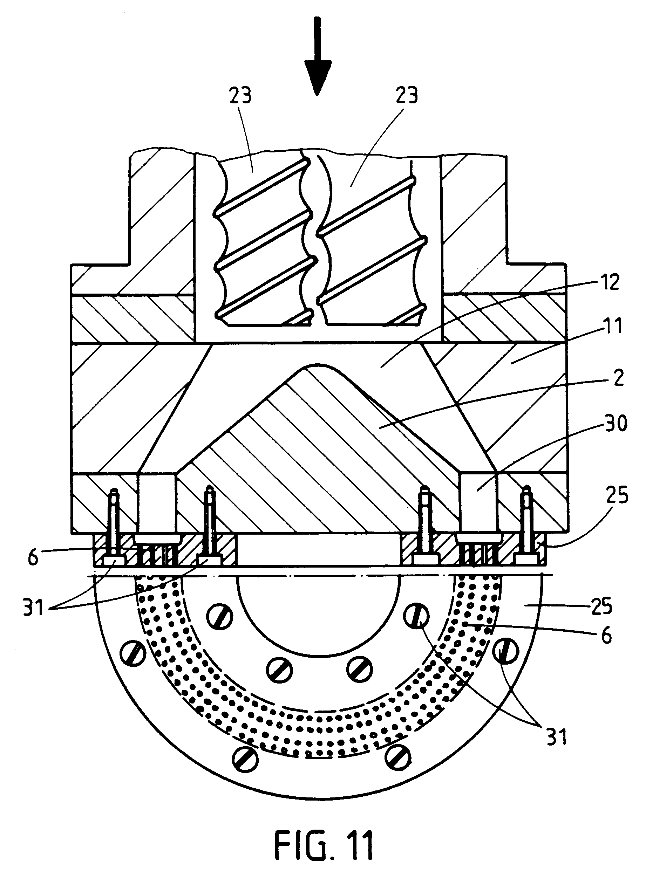

Fig. 11 zeigt einen Granulierkopf gemäß einem dritten Ausführungsbeispiel nach der Erfindung. Im oberen Teil der Fig. ist ein Längsschnitt, im unteren Teil eine Ansicht von außen auf den Lochring 25 zu sehen. Die Formmasse wird durch die Extruderschnecken 23 in den Granulierkopf, und zwar in den Raum 12 zwischen der Umlenkplatte 11 und dem Verdrängerkegel 2 gepreßt. Von dort aus fließt die Formmasse durch einen Ringkanal 30 in die Bohrungen 6 im mittleren Bereich des Lochringes 25 und tritt dort aus, wo die Extrudate dann quer zerteilt werden, z. B. mit Hilfe eines umlaufenden Messers. Im Gegensatz zu dem bisherigen Ausführungsbeispiel der Erfindung wird in diesem Fall keine scheibenförmige Trägerplatte 1 mit darin angeordneten, separaten Lochscheiben 5 verwendet, sondern ein einstückiger Lochring 25 mit darin angeordneten Bohrungen 6. Eine Vorwölbung des Lochrings 25 nach außen wird dadurch vermieden, daß der Lochring 25 sowohl an seiner Innen- als auch Außenseite mit Schrauben 31 fest mit dem Granulierkopf bzw. dem Verdrängerkegel 2 verbunden ist. Ein Vorteil dieser Ausführungsform besteht darin, daß eine Druckverteilungsproblematik der Formmasse innerhalb des Granulierkopfes kaum auftritt und daß der Lochring 25 erheblich mehr Bohrungen 6 aufweist, als eine entsprechende Trägerplatte nach Fig. 10 mit einer äußeren Reihe 24 von Lochscheiben 5.

Nachfolgend werden einige Zahlenbeispiele für Lochscheiben nach den Fig. 5 und 6 aufgeführt.

| Einlaßseitiger Bereich 7 | | | | | | |
|---|---|---|---|---|---|
| Durchmesser | 1,2 | 1,3 | 1,5 | 1,8 | 2,6 mm |
| Länge | 5,3-4,8 | 5-4,5 | 4,8-4 | 5,0 | 5,0 mm |
| Auslaßseitiger Bereich 8 | | | | | | |
| Durchmesser | 0,7 | 1,0 | 1,2 | 1,4 | 2,0 mm |
| Länge | 0,7-1,2 | 1-1,5 | 1,2-2 | 1,0 | 1,0 mm |
| Gesamt-Wandstärke der Lochscheibe 5 | 6,0 | 6,0 | 6,0 | 6,0 | 6,0 mm |
| Anzahl der Bohrungen 6 in der Lochscheibe 5 (27 mm ∅) | 121 | 96 | 96 | 54 | 19 |

Durchmesser der extruderseitigen Fläche der Lochscheibe, also ohne den Auflagebereich 26: 20 bis 25 mm

Die Anzahl von Lochscheiben 5 bei einer Trägerplatte 1 nach Fig. 2 (Mehrkranz-Anordnung)

| Durchmesser der Trägerplatte 1: | 300 mm | 450 mm |
|---|---|---|
| Anzahl der Lochscheiben 5 mit Durchmesser 27mm: | 75 | 126 |

Das erfindungsgemäße Verfahren wurde mit Formmassen gemäß der nachfolgend beschriebenen Beispiele 1 bis 9 durchgeführt.

**Beispiele**

Beispiele 1 bis 5

Zur Herstellung von Textilwaschmitteln in Form der erfindungsgemäßen lagerstabil rieselfähigen Preßlinge werden in den in Tabelle 1 dargestellten Mischungsverhältnissen zwei zuvor getrennt gewonnene Mischungskomponenten miteinander vermischt und aufgearbeitet.

Die erste Mischungskomponente ist ein weitgehend niotensidfreies Trumsprühpulver auf Basis der folgenden Hauptkomponenten (Zahlenwerte jeweils angegeben in Gew.-%)

Tensidgemisch ca. 17,5 %

calcinierte Soda ca. 35 %

Zeolith NaA ca. 22 %

Acrylsäure-Copolymer (Sokalan [R]) ca. 10 %

Wasser ca. 10 %

zum Rest übliche Waschmittelhilfsstoffe

Die zweite Mischungskomponente ist ein hoch-niotensidhaltiges Trägerbead, das aus den folgenden Hauptkomponenten zusammengesetzt ist.

Tensidgemisch ca. 22 %

Zeolith NaA ca. 55 %

Acrylsäure-Copolymer (Sokalan [R]) ca. 3 %

Wasser ca. 15 %

zum Rest Natriumsulfat und andere übliche Hilfsstoffe.

In der nachfolgenden eingehend beschriebenen Verfahrensweise werden die beiden Mischungsbestandteile zerkleinert und vermischt, dann wird die benötigte Menge Wasser und die in Tabelle 1 jeweils angegebene Menge an 55 %iger wäßriger Paste von Alkylbenzolsulfonat zugepumpt. Abschließend wird in den Beispielen 1 bis 3 Natriumperboratmonohydrat zugefügt und kurz nachgemischt.

Das so angefallene rieselfähige Gut wird der homogenisierenden Verdichtung und Plastifizierung zugeführt. Die gebildete Masse wird strangförmig extrudiert, zu zylindrischen Granulatteilchen abgeschlagen, abgerundet und aufgetrocknet.

Im einzelnen gelten die folgenden Angaben:

Vorgemisch-Herstellung

In einem Chargen-Mischer (20 Liter), ausgerüstet mit einem Messerkopf-Zerkleinerer wird das Turmpulver (TP)/Trägerbead (TB) aus der Produktion vorgelegt und ca. 0,5 min. vermischt. Bei laufendem Mischer und Messerkopf-Zerhacker wird die benötigte Wassermenge und anschließend die gesamte ABS-Paste über eine Schlitzdüse zugepumpt (ca. 2,5 min.). Abschließend wird erforderlichenfalls die gesamte Menge an Na-Perborat-Monohydrat hinzugefügt und ca. 1 min. nachgemischt. Das resultierende Vorgemisch ist rieselfähig und kann zur Beschickung der Konti-Kneter-/Extruder-Anlage eingesetzt werden.

Kneter-Extruder/Granulierung

Das erhaltene Vorgemisch wird kontinuierlich einem Zweischnecken-Kenter/Extruder zugeführt, dessen Gehäuse einschließlich des Extruder-Granulierkopfes auf ca. 45 bis 50 °C temperiert sind. Unter Schereinwirkung der Extruderschnecken wird das Vorgemisch plastifiziert und anschließend durch die Extruder-Kopf-Lochscheiben zu feinen Strängen (1,0 und 1,2 mm Durchmesser) extrudiert, die nach dem Austritt mittels eines Abschlagmessers zu zylindrischen Pellets zerkleinert werden (Länge/Durchmesser-Verhältnis etwa 1).

Durch Einblasen von Kaltluft in den Granulier-Messerbereich wird das Granulat auf ca. 40 bis 45 °C abgekühlt und gleichzeitig durch Entfernung von Oberflächenwasser das Verkleben der Pellets verhindert.

Rondierung

Das aus der Extruder-Granulierung anfallende feuchte Granulat wird in einem marktgängigen Rondiergerät vom Typ Marumerizer chargenweise bzw. kontinuierlich unter Zusatz von Zeolith Na-Pulver als Pudermittel abgerundet bzw. entgratet.

Durch Variation der Granulat-Verweilzeit im Rondiergerät und der Rotationsgeschwindigkeit der Gerätescheibe wird der gewünschte Abrundungsgrad eingestellt.

Granulat-Trocknung

Die feuchten Granulate aus dem Rondiergerät werden in einem Diskonti-Wirbelschichttrockner bei einer Zulufttemperatur von ca. 75 bis 80 °C bis zu einer Produkttemperatur von ca. 55 bis 60 °C getrocknet. Nach Abkühlung des Produktes auf ca. 30 °C mit Kaltluft wird ein gut rieselfähiges Produkt erhalten.

Granulat-Siebung

Das sehr staubarme Produkt wird durch ein Sieb mit der Maschenweite 1,6 mm abgesiebt. Der Rückgut-Anteil oberhalb 1,6 mm lag in allen Fällen im Bereich von maximal 3 %. Das gesiebte Gutkorn wird jeweils als Ausgangsbasis für die Abmischung von Waschmittelendprodukten eingesetzt.

# T a b e l l e  1

| Extrudierfähige Vorgemische | Beispiele | | | | |
|---|---|---|---|---|---|
| | 1 | 2 | 3 | 4 | 5 |
| **Zusammensetzung** | | | | | |
| Turmpulver (Gew.-%) | 50,3 | 50,3 | 51,12 | 60,91 | 62,6 |
| Trägerbead | 23,1 | 23,1 | 23,47 | 28,0 | 28,7 |
| Na-Perborat-Monohydrat | 16,0 | 16,0 | 16,27 | - | - |
| ABS-Paste 55 %ig | 8,55 | 8,55 | 4,06 | 8,57 | 4,19 |
| Wasser (VE) | 2,1 | 2,1 | 5,08 | 2,54 | 4,5 |

Extrusions-Bedinungen

| | | | | | |
|---|---|---|---|---|---|
| Extruder-Druck (bar) | 100 | 115 | 80 | 107 | 95 |
| Ø Bohrungen 6, | | | | | |
| Lochdüse (mm) | 1,2 | 1,0 | 1,2 | 4,0 | 1,2 |
| Extruder-Durchsatz (kg/h) | 60 | 55 | 50 | 47 | 40 |
| Produkt-Austragstemperatur (°C) | 53 | 50 | 46 | 43,5 | 41 |

**Chargen-Rondierung**

| | | | | | |
|---|---|---|---|---|---|
| Chargenzeit (min) | 1 | 1 | 1 | 1 | 1 |
| Rotor-Umfangsgeschwindigkeit (m/s) | 30 | 30 | 30 | 30 | 30 |
| Zeolith NaA-Pulver (Gew.-%) | 3,0 | 3,0 | 3,0 | 3,0 | 3,0 |

**Wirbelschichttrocknung**

| | | | | | |
|---|---|---|---|---|---|
| Zulufttemperatur (°C) | 75 | 75 | 75 | 75 | 75 |
| max. Produkttemp. (°C) | 60 | 60 | 60 | 60 | 60 |

## Siebung

| | | | | | |
|---|---|---|---|---|---|
| Gutkorn Ausbeute | 97 | 97 | 97 | 97 | 97 |
| Gutkorn-Schüttgewicht | 950 | 960 | 910 | 890 | 910 |

Beispiel 6

Gemäß der Verfahrensweise aus Beispielen 1 bis 5 wird ein niotensidfreies Turmpulver (ABS ca. 9 %, calcinierte Soda ca 25 %, Zeolith NaA ca. 38 %, Acrylsäure-Copolymer ca. 8 %, Wasser ca. 15 %, zum Rest übliche Waschmittelbestandteile) in einer Einsatzmenge von 88,5 Gew.-% mit 2,5 Gew.-% Wasser, 5 Gew,.-% Niotensid auf Basis Fettalkoholethoxylat (Dehydol LST 80/200) und 4 Gew.-% 55 %iger ABS-Na-Paste versetzt und aufgearbeitet.

Es werden lagerstabil rieselfähige Granulatkugeln mit Gutkorn-Schüttgewichten im Bereich von 900 bis 950 erhalten.

Beispiel 7

Wird ein Wirkstoffgemisch aus Turmpulver und Trägerbead analog den Beispielen 1 bis 5 aufgearbeitet, jetzt jedoch als Plastifizierungsmittel eine 40 %ige Lösung des Axrylsäure-Copolymeren (Handelsprodukt Sokalan CP 5 [R]) in einer Menge von ca. 4,5 Gew.-% unter zusätzlicher Wasserbeigabe zur Plastifizierung (ca. 6 Gew.-%) verwendet, werden wiederum lagerstabil rieselfähige und gleichwohl gut wasserlösliche Granulate in Kugelform erhalten.

Beispiel 8

Im Sinne der Lehre der Beispiele 1 bis 5 werden die folgenden Mischungskomponenten eingesetzt:

Rieselfähiges Turmpulver auf Basis der folgenden Hauptkomponenten: ca. 22 % Tensidgemisch, ca. 2,5 % Na-Seife auf Talgbasis, ca. 15 % calcinierte Soda, ca 7 % Wasserglas, ca. 26,5 % Zeolith NaA, ca. 7,5 % Acrylsäure-Copolymeres, ca. 12 % Wasser, zum Rest übliche Beistoffe.

Niotensidreiches Trägerbead auf Basis der folgenden Hauptkomponenten: Ca. 22 % Tensidgemisch, Na-Seife auf Talgbasis ca. 2 %, Zeolith NaA ca. 55 %, Acrylsäure-Copolymeres ca. 3 %, Wasser ca. 15 %.

Das gemäß der Arbeitsanweisung aus Beispielen 1 bis 5 zerkleinerte und vermischte Gut wird mit ca. 11 % (bezogen auf Gesamtgemisch) an 60 %iger ABS-Paste versetzt und homogenisiert. Das entstehende Material wird durch Verkneten plastifizierend verdichtet und formgebend verpreßt. Es fallen lagerbeständig riesel- und schüttfähige, gut einspülbare Granulatpreßlinge in Kugelform mit Schüttdichten im Bereich von 900 bis 950 g/l an.

Beispiel 9

Ein phosphatfreies und pH-neutrales Spezialwaschmittel-Teilturmpulver etwa folgender Zusammensetzung:

Tensidgemisch 16 %
Seife 2,8 %
Zeolith 16,0 %
Sokalan CP 5 [R] 3,2 %
$Na_2SO_4$ 58 %
Rest übliche Kleinkomponenten
wird mit 5 Gew.-% ABS-Paste (40 %ig) intensiv vermisch und anschließend in einem Extruder zunächst plastifiziert und dann durch eine Lochscheibe mit 1,2 mm Düsenbohrungen extrudiert. Die Temperatur wird durch Temperierung des Mantels so geführt, daß Produkttemperaturen von 45 bis 50 °C eingestellt werden. Die aus der Düsenplatte austretenden verdichteten Massestränge werden durch umlaufende Messer abgeschnitten und dabei zylinderförmige Partikel mit einem Länge/Durchmesser-Verhältnis von ca. 1 gewonnen. Die noch warmen Partikel werden in einem Marumerizer unter Zusatz von ca. 2 % Zeolith NaA-Pulver verrundet und wie zuvor beschrieben in einem Wirbelschichttrockner getrocknet. Nach Trocknung werden Produkte mit Schüttgewichten zwischen ca. 850 und 920 g/l erhalten - das jeweilige Schüttgewicht ist vom Ausmaß der Verrundung abhängig.

Die Aufbereitung mit ca. 3 % praxisüblicher Waschmittel-Kleinkomponenten (Parfüm, Enzym, gegebenenfalls Farbsprenkel) führt zu keiner wesentlichen Veränderung der Schüttgewichte.

**Bezugszeichenliste**

| | |
|---|---|
| 1 = | Trägerplatte |
| 2 = | Verdrängerkegel |
| 3 = | Vorverteiler |
| 4 = | Lochscheibenhalterung |
| 5 = | Lochscheiben |
| 6 = | Bohrung |
| 7 = | einlaßseitiger Bereich |
| 8 = | auslaßseitiger Bereich |
| 9 = | Übergangsbereich |
| 10 = | Längsachse der Bohrungen |
| 11 = | Umlenkplatte |
| 12 = | axiale Bohrung in der Umlenkplatte |
| 13 = | innere Flächen |
| 14 = | Kanten |
| 15 = | Fläche |
| 16 = | Bohrung im Vorverteiler |
| 17 = | Längsachse |
| 18 = | Querschnittsfläche |
| 19 = | Fläche |
| 20 = | - |
| 21 = | freier Bereich |
| 22 = | - |
| 23 = | Extruderschnecke |
| 24 = | Reihen |
| 25 = | Lochplatte, Lochring |
| 26 = | Auflagefläche |
| 27 = | Schulter |
| 28 = | umlaufender Rand |
| 29 = | Rand |
| 30 = | Ringkanal |
| 31 = | Schrauben |

**Patentansprüche**

1. Verfahren zum Herstellen von Granulaten eines tensidhaltigen Wasch- oder Reinigungsmittels, insbesondere eines Waschmittels für Textilwäsche, aus einem Gemisch wenigstens teilweise fester feinteiliger Inhaltsstoffe, dadurch gekennzeichnet, daß das Gemisch frei von Enzymen ist und man dem Gemisch Plastifizier- und/oder Gleitmittel zugibt, daß die so erhaltene Formmasse mittels eines Extruders bei mindestens 25 bar durch eine Vielzahl von Bohrungen (6) gepreßt wird, die einen einlaßseitigen Bereich (7) mit größerem und einen auslaßseitigen Bereich (8) mit kleinerem Durchmesser aufweisen, wobei das Länge-Durchmesser-Verhältnis beim einlaßseitigen Breich (7) zwischen 1,5 und 6 und beim auslaßseitigen Breich (8) zwischen 0,3 und 2 liegt, und daß die austretenden Materialstränge unmittelbar nach dem Auslaß auf der vorgegebenen Länge quer zerteilt werden.

2. Verfahren nach Anspruch 1, dadurch gekennzeichnet, daß der einlaßseitige Bereich (7) der Bohrungen (6) in Richtung auf den Einlaß konisch abgeschrägt ist.

3. Verfahren nach Anspruch 2, dadurch gekennzeichnet, daß der Abstand dieser Bohrungen (6) so gering ist, daß die Ränder (29) der Einlässe benachbarter Bohrungen (6) sich berühren oder schneiden.

4. Verfahren nach einem der Ansprüche 1 bis 3, dadurch gekennzeichnet, daß der Übergangsbereich (9) zwischen dem einlaßseitigen Bereich (7) und dem auslaßseitigen Bereich (8) der Bohrungen (6) mit einem Winkel (alpha) von 20° bis 85°, vorzugsweise 40° bis 80° und insbesondere 45° bis 75°, gegen die Ebene senkrecht zur Längsachse (10) dieser Bohrungen (6) geneigt ist.

5. Verfahren nach einem der Ansprüche 1 bis 4,
   dadurch gekennzeichnet,
   daß der Durchmesser des auslaßseitigen Bereichs (8) der Bohrungen (6) zwischen 0,5 und 5 mm, insbesondere zwischen 1,0 und 2,5 mm, liegt.

6. Verfahren nach einem der Ansprüche 1 bis 5,
   dadurch gekennzeichnet,
   daß der Durchmesser des einlaßseitigen Bereichs (7) der Bohrungen (6) zwischen 0,8 und 4 mm, insbesondere zwischen 1,2 und 3 mm, liegt.

7. Verfahren nach einem der Ansprüche 1 bis 6,
   dadurch gekennzeichnet,
   daß während des Extrudierens eine Leistung zwischen 0,005 und 1, vorzugsweise 0,01 und 0,8 und insbesondere 0,02 und 0,08 kW pro kg Extrudat eingetragen wird.

8. Verfahren nach einem der Ansprüche 1 bis 7,
   dadurch gekennzeichnet,
   daß mit einem Druck von 25 bis 250 bar, insbesondere von 50 bis 200 bar extrudiert wird.

9. Verfahren nach einem der Ansprüche 1 bis 8,
   dadurch gekennzeichnet,
   daß man bei die Verpressung bei Massetemperaturen im Bereich zwischen 25 und 75 °C, vorzugsweise zwischen 30 und 70 °C durchführt und durch Schockkühlung - insbesondere mittels Kaltluft - die austretenden plastifizierten Stränge vor und/oder während ihrer Zerteilung wenigstens oberflächlich abkühlt und antrocknet.

10. Verfahren nach einem der Ansprüche 1 bis 9,
    dadurch gekennzeichnet,
    daß die Formmasse an einem innerhalb des Granulierkopfs des Extruders mit Abstand von der Extruderschnecke angeordneten und mit der Kegelspitze auf die Extruderschnecke (23) weisenden Verteilerkörper (2) vorbei durch die Bohrungen (6) gepreßt wird.

11. Verfahren nach Anspruch 10,
    gekennzeichnet durch eine extruderseitig vor dem Verteilerkörper (2) angeordnete Umlenkplatte (11), deren axiale Bohrung (12) sich im wesentlichen vom Durchmesser der Extruderschnecke bis im wesentlichen zum Durchmesser des Granulierkopfs vergrößert.

12. Verfahren nach einem der Ansprüche 1 bis 11,
    dadurch gekennzeichnet,
    daß die Bohrungen (6) in Lochscheiben (5) angeordnet sind, die von einer Trägerplatte (1) gehalten werden.

13. Verfahren nach Anspruch 12,
    dadurch gekennzeichnet,
    daß die Lochscheiben (5) an der auslaßseitigen Stirnfläche der Trägerplatte (1) in als Durchgangsbohrungen ausgebildeten Lochscheibenhalterungen (4) angeordnet sind.

14. Verfahren nach Anspruch 12 oder 13,
    dadurch gekennzeichnet,
    daß die Formmasse innerhalb des Granulierkopfs des Extruders durch einen zwischen dem Verteilerkörper (2) und der Trägerplatte (1) angeordneten Vorverteiler (3) gepreßt wird.

15. Verfahren nach einem der Ansprüche 12 bis 14,
    dadurch gekennzeichnet,
    daß die inneren Flächen (13) der Umlenkplatte (11) ausschließlich abgerundete Kanten (14) aufweisen.

**16.** Verfahren nach einem der Ansprüche 12 bis 15
dadurch gekennzeichnet,
daß der Abstand zwischen der zum Extruder weisenden Fläche (15) des Verteilerkörpers (2) und der dieser gegenüberliegenden inneren Fläche (13) der Umlenkplatte (11) im wesentlichen konstant ist.

**17.** Verfahren nach einem der Ansprüche 13 bis 16,
dadurch gekennzeichnet,
daß die Wege der zu granulierenden Formmasse zu den der Längsachse (17) des Granulierkopfes am nächsten und zu den am weitesten entfernt liegenden Lochscheibenhalterungen (4) der Trägerplatte (1) in etwa gleich sind.

**18.** Verfahren nach einem der Ansprüche 14 bis 17,
dadurch gekennzeichnet,
daß der Abstand zwischen der extruderseitigen äußeren Querschnittsfläche (18) des Vorverteilers (3) und der dieser Fläche (18) gegenüberliegenden Fläche (19) des Verteilerkörpers mindestens 3 % des Durchmessers des Vorverteilers (3) beträgt.

**19.** Verfahren nach einem der Ansprüche 12 bis 18,
dadurch gekennzeichnet,
daß die Lochscheiben (5), insbesondere in mehreren konzentrischen Reihen (24) im wesentlichen über die gesamte Trägerplatte (1) verteilt angeordnet sind.

**20.** Verfahren nach einem der Ansprüche 12 bis 18,
dadurch gekennzeichnet,
daß die Lochscheiben (5) in nur einer äußeren kreisförmigen Reihe (24) auf der Trägerplatte (1) angeordnet sind.

**21.** Verfahren nach einem der Ansprüche 1 bis 11,
dadurch gekennzeichnet,
daß die Bohrungen (6), insbesondere in mehreren konzentrischen Reihen, in einer Lochplatte (25) angeordnet sind.

**22.** Verfahren nach Anspruch 21,
dadurch gekennzeichnet,
daß die Bohrungen (6) im wesentlichen nur am äußeren Rand der Lochplatte (25) angeordnet sind.

**23.** Verfahren nach Anspruch 22,
dadurch gekennzeichnet,
daß die Lochplatte (25) als ein am Innen- und Außenrand mit dem Granulierkopf verbundener Lochring (25) ausgebildet ist.

**Claims**

**1.** A process for the production of granules of a surfactant-containing detergent, more particularly a laundry detergent, from a mixture of at least partly solid fine-particle ingredients, characterized in that the mixture is free of enzymes and plasticizers and/or lubricants are added to the mixture, the moulding compound thus obtained is extruded by means of an extruder under a pressure of at least 25 bar through a plurality of bores (6) which have an inlet-end zone (7) of relatively large diameter and an outlet-end zone (8) of smaller diameter, the length-to-diameter ratio in the inlet-end zone (7) being between 1.5 and 6:1 and, in the outlet-end zone (8), between 0.3 and 2:1 and in that the issuing strands are cut transversely to predetermined lengths immediately after leaving the bores.

**2.** A process as claimed in claim 1, characterized in that the inlet-end zone (7) of the bores (6) is conically chamfered towards the inlet.

**3.** A process as claimed in claim 2, characterized in that the distance between the bores (6) is so small that the edges (29) of the inlets of adjacent bores (6) touch or overlap one another.

4. A process as claimed in any of claims 1 to 3, characterized in that the transition zone (9) between the inlet-end zone (7) and the outlet-end zone (8) of the bores (6) is inclined at an angle (alpha) of 20° to 85°, preferably 40° to 80° and, more preferably, 45° to 75° towards the plane perpendicular to the longitudinal axis (10) of the bores (6).

5. A process as claimed in any of claims 1 to 4, characterized in that the diameter of the outlet-end zone (8) of the bores (6) is between 0.5 and 5 mm and, more particularly, between 1.0 and 2.5 mm.

6. A process as claimed in any of claims 1 to 5, characterized the diameter of the inlet-end zone (7) of the bores (6) is between 0.8 and 4 mm and, more particularly, between 1.2 and 3 mm.

7. A process as claimed in any of claims 1 to 6, characterized in that the power consumed during extrusion amounts to between 0.005 and 1, preferably to between 0.01 and 0.8 and, more preferably, to between 0.02 and 0.08 kW per kg of extrudate.

8. A process as claimed in any of claims 1 to 7, characterized in that extrusion is carried out under a pressure of 25 to 250 bar and, more particularly, under a pressure of 50 to 200 bar.

9. A process as claimed in any of claims 1 to 8, characterized in that extrusion is carried out at temperatures of the compound of 25 to 75°C and preferably in the range from 30 to 70°C and in that the issuing plasticized strands are at least surface-cooled and dried by shock cooling, more particularly with cold air, before and/or during their size reduction.

10. A process as claimed in any of claims 1 to 9, characterized in that the moulding compound is extruded through the bores (6) past a distributor (2) which is arranged at a distance from the extrusion screw (23) in the granulation head of the extruder and of which the cone tip points towards the extrusion screw (23).

11. A process as claimed in claim 10, characterized by a baffle plate (11) which is arranged in front of the distributor (2) on the extruder side and of which the axial bore (12) increases in diameter substantially from the diameter of the extrusion screw to substantially the diameter of the granulation head.

12. A process as claimed in any of claims 1 to 11, characterized in that the bores (6) are arranged in perforated disks (5) which are held by a carrier plate (1).

13. A process as claimed in claim 12, characterized in that the perforated disks (5) on the outlet-side face of the carrier plate (1) are arranged in perforated-disk holders (4) in the form of bores.

14. A process as claimed in claim 12 or 13, characterized in that the moulding compound is extruded through a preliminary distributor (3) arranged between the distributor (2) and the carrier plate (1) inside the granulation head of the extruder.

15. A process as claimed in any of claims 12 to 14, characterized in that the inner faces (13) of the baffle plate (11) solely comprise rounded edges (14).

16. A process as claimed in any of claims 12 to 15, characterized in that the distance between that face (15) of the distributor (2) which points towards the extruder and the opposite inner face (13) of the baffle plate (11) is substantially constant.

17. A process as claimed in any of claims 13 to 16, characterized in that the distances which the moulding compound to be granulated travels to the perforated-disk holders (4) of the carrier plate (1) situated closest to and furthest from the longitudinal axis (17) of the granulation head are substantially the same.

18. A process as claimed in any of claims 14 to 17, characterized in that the distance between the outer cross-sectional area (18) of the preliminary distributor (3) on the extruder side and the face (19) of the distributor situated opposite the face (18) is at least 3% of the diameter of the preliminary distributor (3).

## EP 0 518 888 B1

**19.** A process as claimed in any of claims 12 to 18, characterized in that the perforated disks (5) are distributed substantially over the entire carrier plate (1), more particularly in several concentric rows (24).

**20.** A process as claimed in any of claims 12 to 18, characterized in that the perforated disks (5) are arranged in only one outer circular row (24) on the carrier plate (1).

**21.** A process as claimed in any of claims 1 to 11, characterized in that the bores (6) are arranged in a perforated plate (25), more particularly in several concentric rows.

**22.** A process as claimed in claim 21, characterized in that the bores (6) are substantially arranged only at the outer edge of the perforated plate (25).

**23.** A process as claimed in claim 22, characterized in that the perforated plate (25) is in the form of a perforated ring (25) connected to the granulation head at its inner and outer edges.

**Revendications**

**1.** Procédé de production de granulés d'agent de lavage ou d'agent de nettoyage contenant un agent tensioactif, en particulier agent de lavage pour articles textiles, à base d'un mélange d'ingrédients au moins partiellement solides, caractérisé en ce que le mélange est dépourvu d'enzyme et en ce qu'on ajoute au mélange un agent de ramollissement et/ou de glissement, en ce que la masse de moulage ainsi obtenue est pressée à l'aide d'un extrudeur à au moins 25 bars, à travers une multiplicité de perçages (6) qui possèdent une zone (7) du côté de l'entrée avec un diamètre plus grand et une zone du côté de la décharge (8) avec un diamètre plus petit, pour lesquels le rapport longueur/diamètre dans la zone (7) du côté de l'entrée se situe entre 1,5 et 6 et dans la zone (8) du côté de la décharge entre 0,3 et 2 et en ce que les filaments de matériaux qui sortent, immédiatement après la décharge, sont découpés transversalement à une longueur prédéterminée.

**2.** Procédé selon la revendications 1, caractérisé en ce que la zone du côté de l'entrée (7) des perçages (6) dans la direction de l'entrée est inclinée d'une manière conique.

**3.** Procédé selon la revendication 2, caractérisé en ce que la distance de ces perçages (6) est si faible que les bordures (29) se touchent ou coupent les perçages voisins des entrées.

**4.** Procédé selon l'une des revendications 1 à 3, caractérisé en ce que la zone de transition (9) entre la zone du côté de l'entrée (7) et la zone du côté de la décharge (8) des perçages (6) est inclinée avec un angle (alpha) de 20 à 85°, de préférence 40° à 80° et en particulier de 45 à 75°, par rapport au plan perpendiculaire à l'axe longitudinal (10) de ces perçages (6).

**5.** Procédé selon l'une des revendications 1 à 4, caractérisé en ce que le diamètre de la zone (8) du côté de la décharge des perçages (6) se situe entre 0,5 et 5 mm, en particulier entre 1,0 et 2,5 mm.

**6.** Procédé selon l'une des revendications 1 à 5, caractérisé en ce que le diamètre de la zone du côté de l'entrée (7) des perçages (6) se situe entre 0,8 et 4 mm, en particulier entra 1,2 et 3 mm.

**7.** Procédé selon l'une des revendications 1 à 6, caractérisé en ce que pendant l'extrusion une puissance entre 0,005 et 1, de préférence entre 0,01 et 0,8 et en particulier entre 0,02 et 0,08 kW par Kg d'extrudat est introduite.

**8.** Procédé selon l'une des revendications 1 à 7, caractérisé en ce que l'on extrude avec une pression de 25 à 250 bars, en particulier de 50 à 200 bars.

**9.** Procédé selon l'une des revendications 1 à 8, caractérisé en ce que l'on effectue la compression à des températures de masse dans la plage comprise entre 25 et 75°C, de préférence entre 30 et 70°C et qu'on refroidit par refroidissement choc en particulier avec de l'air froid, les filaments ramollis qui sortent, avant et/ou pendant leur découpage, au moins superficiellement et on sèche.

**10.** Procédé selon l'une des revendications 1 à 9, caractérisé en ce que la masse de moulage est pressé sur un corps de répartiteur (2) à l'intérieur de la tête de granulation de l'extrudeur disposé à un intervalle de la vis sans fin de l'extrudeur, et qui regarda avec la pointe du cône sur la vis sans fin de l'extrudeur (23) passé à travers les perçages (6).

**11.** Procédé selon la revendication 10, caractérisé par une plaque déflecteur (11) disposée du côté de l'extrudeur, devant le corps de répartiteur (2) dont le perçage axial (12) s'agrandit pour l'essentiel du diamètre de la vis sans fin de l'extrudeur jusqu'à pour l'essentiel au diamètre de la tête de granulation.

**12.** Procédé selon une des revendications 1 à 11, caractérisé en ce que les perçages (6) sont disposés dans des disques perforés (5) qui sont maintenus par une plaque support (1).

**13.** Procédé selon la revendications 12, caractérisé en ce que les disques perforés (5) sont disposés sur la surface frontale du côté de la décharge de la plaque support (1) dans des appuis de disque perforé (4) formés sous forme de perçage de passage.

**14.** Procédé selon la revendication 12 ou 13, caractérisé en ce que la masse de moulage à l'intérieur de la tête de granulation de l'extrudeur est pressée à travers un pré-répartisseur (3) disposé entre le corps de répartiteur (2) et la plaque support (1).

**15.** Procédé salon l'une des revendications 12 à 14, caractérisé en ce que les faces internes (13) de la plaque déflecteur (11) possèdent exclusivement des arêtes arrondies (14).

**16.** Procédé selon l'une des revendications 12 à 15, caractérisé en ce que l'intervalle entre les surfaces qui regardent vers l'extrudeur (15) du corps du répartiteur (2) et les surfaces internes qui leur font vis-à-vis (13) de la plaque déflecteur est essentiellement constant.

**17.** Procédé selon l'une des revendications 13 à 16, caractérisé en ce que les chemins de la masse de moulage qui doit êtra granulée à celui de l'axe longitudinal (17) de la tête de granulation le plus proche et aux appuie qui se situent le plus loin éloignées des disques perforés (4) de la plaque support (1) sont à peu près égaux.

**18.** Procédé selon l'une des revendications 14 à 17, caractérisé en ce que l'intervalle entre la surface de la coupe transversale externe du côté de l'extrudeur (18) du pré-répartiteur (3) et celle des surfaces (19) qui font vis-à-vis à ces surfaces (18), du corps du répartiteur, s'élève à au moins 3 % du diamètre du pré-répartiteur (3).

**19.** Procédé selon l'une des revendications 12 à 18, caractérisé en ce que les disques perforés (5) sont disposés répartis essentiellement sur toute la plaque support (1), en particulier en plusieurs rangées concentriques (24).

**20.** Procédé selon l'une des revendications 12 à 18, caractérisé en ce que les disques perforés (5) sont seulement disposés dans une rangée (24) extérieure de forme circulaire sur la plaque support (1).

**21.** Procédé selon l'une des revendications 1 à 11, caractérisé en ce que les perçages (6) sont disposés an particulier en plusieurs rangées concentriques dans une plaque perforée (25).

**22.** Procédé selon la revendication 21, caractérisé en ce que les perçages (6) sont disposés essentiellement seulement sur le bord externe de la plaque perforée (25).

**23.** Procédé selon la revendication 22, caractérisé en ce que la plaque à trou (25) est formée comme un anneau perforé (25) relié à la tête de granulation sur le bord interne et externe.

FIG.1

FIG.2

FIG.3

FIG.4

FIG.5

FIG.6

FIG.7

FIG.8

FIG.9

FIG.10

FIG. 11